# EUROPÄISCHE PATENTSCHRIFT

(11) **EP 2 378 494 B1**
(45) Veröffentlichungstag und Bekanntmachung des Hinweises auf die Patenterteilung: **28.09.2016**
(21) Anmeldenummer: 11401025.9
(22) Anmeldetag: 21.02.2011
(51) Int. Cl.: G07F 7/06, G01D 11/28, G02B 6/00, G09F 13/22

(54) **Leergutrücknahmevorrichtung**
Empties returning device
Dispositif de récupération de bouteilles consignées

(30) Priorität: 14.04.2010 DE 102010016435
(43) Veröffentlichungstag der Anmeldung: 19.10.2011
(73) Patentinhaber: Wincor Nixdorf International GmbH, 33106 Paderborn (DE)
(72) Erfinder: Almeroth, Klaus, 98693 Ilmenau (DE); Hoppe, Burkhard, 99334 Elleben (DE); Pfauch, Christian, 99894 Leinatal (DE)
(74) Vertreter: Schaumburg und Partner Patentanwälte mbB

(56) Entgegenhaltungen:
- EP-A1- 0 498 451
- EP-A2- 0 088 182
- WO-A1-81/02802
- DE-A1- 19 519 221
- US-A- 4 248 334
- US-A1- 2002 080 623
- US-A1- 2006 028 837

## Beschreibung

Die Erfindung geht aus von einer Leergutrücknahmevorrichtung zur Rücknahme von Leergutbehältern.

Leergutrücknahmevorrichtungen werden auch als Leergutrücknahmeautomaten bezeichnet. Sie dienen dazu, Leergutbehälter, insbesondere einzelne Flaschen oder Dosen sowie mit Flaschen gefüllte Getränkekisten, Partyfässer oder sonstige Leergutgebinde, aufzunehmen und in Abhängigkeit von charakteristischen Merkmalen der eingegebenen Leergutbehälter ein Pfand an den Benutzer auszugeben. Bei den Leergutbehältern kann es sich um Einweg- oder Mehrwegbehälter handeln. Manche Leergutbehälter werden ohne Ausgabe eines Pfands zurückgenommen. Die charakteristischen Merkmale werden auch als Erkennungsmerkmale bezeichnet. Bei Leergutbehältern wie Flaschen oder Dosen werden als Erkennungsmerkmale beispielsweise die Form und das Material, ein Barcode oder Strichcode, eine DPG- oder DRS-Kennzeichnung, ein eventuell noch auf der Flasche angeordneter Verschluss, eine Beschädigung sowie eine vollständige oder teilweise Befüllung erfasst. Bei kastenartigen oder fassartigen Leergutbehältern werden als Erkennungsmerkmale beispielsweise die Form des Leergutgebindes, eine Kennzeichnung, die Vollständigkeit beziehungsweise die Anzahl und der Typ der in einer Getränkekiste enthaltenen Flaschen, die Flaschensorte, eventuelle Fremdflaschen, quer oder längs liegende Flaschen, Flaschen, welche mit ihrer Öffnung nach unten in der Getränkekiste ausgerichtet sind, beschädigte Flaschen, Flaschen mit oder ohne Verschluss, teilweise oder ganz gefüllte Flaschen, Fremdkörper zwischen den Falschen sowie eventuelle Beschädigungen der Flaschen oder der Getränkekiste erfasst. Zur Bestimmung der Erkennungsmerkmale ist mindestens ein Sensor an der Leergutrücknahmevorrichtung angeordnet. Es können auch mehrere Sensoren zur Bestimmung verschiedener Merkmale vorgesehen sein.

Um einen durch einen Nutzer in die Leergutrücknahmevorrichtung eingegebenen Leergutbehälter dem mindestens einen Sensor zuzuführen, gegebenenfalls relativ zum Sensor auszurichten und den Leergutbehälter nach der Erfassung des oder der Erkennungsmerkmale weiter zu transportieren, ist eine Transporteinrichtung vorgesehen. Die Eingabe der Leergutbehälter in die Leergutrücknahmevorrichtung erfolgt durch eine Eingabeöffnung in einer Abdeckung der Leergutrücknahmevorrichtung. Hinter der Eingabeöffnung ist die Transporteinrichtung angeordnet. Sie weist beispielsweise Transportbänder, Transportwalzen, Flügelräder und/ oder schiefe Ebenen auf.

Ferner sind bekannte Leergutrücknahmevorrichtungen mit einer Prozesssteuerung ausgestattet, welche die durch die Sensoren bestimmten Signale und/ oder Daten eines Leergutbehälters auswertet, daraus den Wert eines Pfandes bestimmt, und die Transporteinrichtung steuert. So kann die Transporteinrichtung beispielsweise durch die Prozesssteuerung angetrieben werden, bis ein Leergutbehälter relativ zu einem Sensor ausgerichtet ist, um beispielsweise einen Barcode an dem Leergutbehälter zu erfassen. Wird bei der Auswertung der durch einen Sensor ermittelten Daten festgestellt, dass ein Leergutbehälter nicht von der Leergutrücknahmevorrichtung angenommen wird, so sorgt die Prozesssteuerung dafür, dass die Transporteinrichtung angetrieben wird, um den Leergutbehälter an den Benutzer wieder auszugeben. Erfüllt ein Leergutbehälter dagegen die Anforderungen um angenommen zu werden, so wird durch die Prozesssteuerung aus den durch die Sensoren ermittelten Daten der Wert eines Pfandes bestimmt und die Transporteinrichtung angetrieben, um den betreffenden Leergutbehälter aus dem Bereich des Sensors herauszuführen und Platz für einen nachfolgenden Leergutbehälter zu schaffen. Der abtransportierte Leergutbehälter wird durch die Transporteinrichtung einer Sammelstation zugeführt. Stehen mehrere Sammelstationen zur Verfügung, so können die Leergutbehälter bereits beim Abtransport in Abhängigkeit der durch die Sensoren und die Prozesssteuerung ermittelten Erkennungsmerkmale sortiert und einer bestimmten Sammelstation zugeführt werden. Handelt es sich um Einwegbehälter, so werden diese beispielsweise zerkleinert oder auf ein kleines Packmaß zusammengepresst.

Bei der Prozesssteuerung handelt es sich üblicherweise um einen in die Vorrichtung integrierten oder externen Computer, der mit spezieller Software ausgestattet ist.

Bekannte Leergutrücknahmevorrichtungen weisen eine Anzeigeeinrichtung auf, um einen Nutzer bzw. Kunden darüber zu informieren, ob die Leergutrücknahmevorrichtung für die Eingabe von Leergutbehältern bereit ist, ob die von ihm in die Leergutrücknahmevorrichtung eingegebenen Leergutbehälter durch die Vorrichtung angenommen werden und welches Pfand den Leergutbehältern zugeordnet wird. Bei den Anzeigeeinrichtungen handelt es sich in der Regel um einen Bildschirm und Pfeile, wie sie insbesondere aus dem Dokument WO81/02802 A1 bekannt sind.

Auf dem Bildschirm werden die entsprechenden Informationen in Worten und Zahlen angegeben. Als nachteilig erweist sich hierbei, dass die Anzeigeeinrichtung räumlich getrennt von der Eingabeöffnung angeordnet ist. Zwar ist der Abstand zwischen der Anzeigeeinrichtung und der Eingabeöffnung in der Regel nicht so groß, dass der Nutzer seine Position ändern muss, um beide einzusehen. Jedoch befindet sich entweder nur die Eingabeöffnung oder die Anzeigeeinrichtung gleichzeitig im Blickfeld des Nutzers. Dieser ist daher gezwungen, den Blick abwechselnd auf die Eingabeöffnung und die Anzeigeeinrichtung zu richten, um den Eingabevorgang nachzuvollziehen. Dies erschwert und verzögert die Eingabe von Leergutbehältern in die Leergutrücknahmevorrichtung.

Der Erfindung liegt die Aufgabe zugrunde, einen Leergutrücknahmeautomaten zur Verfügung zu stellen, der die Eingabe von Leergutbehaltern ermöglicht, ohne dass der Nutzer dabei abwechselnd den Blick auf die Eingabeöffnung und eine Anzeigeeinrichtung richten muss, um über den Status der Leergutrücknahmevorrichtung und den Erfolg der Eingabe informiert zu werden.

Diese Aufgabe wird durch eine erfindungsgemäße Leergutrücknahmevorrichtung mit den Merkmalen des Anspruchs 1 gelöst. Die Leergutrücknahmevorrichtung zeichnet sich dadurch aus, dass die Eingabeöffnung mit einer Licht abstrahlenden, durch die Prozesssteuerungseinrichtung gesteuerten Leuchteinrichtung ausgestattet ist, welche an der Eingabeöffnung angeordnet ist und die Eingabeöffnung an mehreren Seiten und zu mehreren Seiten hin umgibt. Sie umrahmt damit die Eingabeöffnung zumindest teilweise. Der Nutzer hat somit stets die Eingabeöffnung und die Leuchteinrichtung gleichzeitig im Blick. Er ist daher nicht gezwungen, den Blick abwechselnd auf die Eingabeöffnung und eine zusätzliche Anzeigeeinrichtung zu richten, um über den Status der Leergutrücknahmevorrichtung informiert zu werden.

Der Status der Leuchteinrichtung gibt Aufschluss über den Status der Leergutrücknahmevorrichtung. Strahlt die Leuchteinrichtung Licht eines Wellenlängenbereichs ab, so kann der Status der Leuchteinrichtung beispielsweise zwischen Eingeschaltet, Ausgeschaltet und Blinkend wechseln. Jeder Status steht dabei für einen bestimmten Status der Leergutrücknahmevorrichtung. Der Status Eingeschaltet der Leuchteinrichtung kann beispielsweise bedeuten, dass die Leergutrücknahmevorrichtung in Funktion ist und zur Eingabe von Leergutbehältern bereit steht. Ausgeschaltet kann beispielsweise bedeuten, dass die Leergutrücknahmevorrichtung nicht zur Eingabe von Leergutbehältern bereit steht, weil sie entweder nicht in Betrieb ist oder gerade einen Leergutbehälter erfasst. Der Status Blinkend kann beispielsweise bedeuten, dass ein eingegebener Leergutbehälter von der Leergutrücknahmevorrichtung angenommen wird und die Eingabe somit erfolgreich war. Darüber hinaus kann die eine Leuchteinrichtung vorgesehen sein, Licht unterschiedlicher Wellenlängenbereiche abzustrahlen. In diesem Fall kann die Leuchteinrichtung in unterschiedlichen Farben leuchten, um den Status der Leergutrücknahmevorrichtung anzuzeigen. So kann beispielsweise grünes Licht für eine zur Eingabe eines Leergutbehälters bereit stehende Leergutrücknahmevorrichtung stehen. Rotes Licht kann beispielsweise bedeuten, dass die Leergutrücknahmevorrichtung nicht betriebsbereit ist oder ein eingegebener Leergutbehälter nicht von der Vorrichtung angenommen wird. Wird die Annahme eines Leergutbehälters zunächst abgelehnt, so besteht die Möglichkeit, dass ein charakteristisches Merkmal des Leergutbehälters durch einen in der Leergutrücknahmevorrichtung angeordneten Sensor nicht erkannt wurde, da der Leergutbehälter aufgrund seiner Ausrichtung bei der Eingabe ungünstig im Bezug auf einen Sensor positioniert war. In diesem Fall wird der Nutzer aufgefordert, den Leergutbehälter aus der Eingabeöffnung zu entnehmen und mit einer anderen Ausrichtung erneut in die Eingabeöffnung einzulegen. Hierzu kann eine weitere Farbe der Leuchteinrichtung vorgesehen sein. Für den Fall, dass ein Leergutbehälter endgültig abgelehnt wird, kann eine weitere Farbe der Leuchteinrichtung vorgesehen sein. Werden beispielsweise die aus dem Straßenverkehr bekannten Farben der Ampeln verwendet, so sind die zugehörigen Bedeutungen betreffend den Status der Leergutrücknahmevorrichtung für den Nutzer bekannt oder in nahe liegender Weise zu erschließen.

Die Leuchteinrichtung strahlt das Licht bevorzugt zumindest teilweise nach vorne in die dem Sensor und der Transporteinrichtung abgewandte Richtung der Abdeckung ab, so dass der Nutzer das Licht erkennen kann. Die Leuchteinrichtung kann das Licht auch in Richtung der Transporteinrichtung abstrahlen. Ist die Eingabeöffnung nicht verschlossen, so kann der Nutzer den Abschnitt der Transporteinrichtung unmittelbar hinter der Abdeckung einsehen. Aufgrund von Streulicht und da die Transporteinrichtung das Licht der Leuchteinrichtung reflektiert, erstrahlt der gesamte Bereich der Leergutrücknahmevorrichtung in dem von der Leuchteinrichtung abgestrahlten Licht. Dies ist für den Nutzer sichtbar. Je nach Status der Leergutrücknahmevorrichtung kann die Leuchteinrichtung auch abwechselnd überwiegend nach außen und überwiegend nach innen Licht abstrahlen.

Nach einer vorteilhaften Ausgestaltung der Erfindung ist die Leuchteinrichtung mit mehreren Lichtquellen unterschiedlicher Wellenlängenbereiche ausgestattet. Jede der Lichtquellen weist dabei eine Abstrahlcharakteristik mit Licht eines bestimmten Wellenlängenbereichs auf. Die Wellenlängenbereiche der Lichtquellen überlappen nicht oder allenfalls teilweise. Auf diese Weise strahlt die Leuchteinrichtung Licht unterschiedlicher Farben ab. Alternativ zu verschiedenen Lichtquellen kann auch eine Lichtquelle mit weißem Licht und unterschiedlichen Farbfiltern vorgesehen sein, um Licht unterschiedlicher Wellenlängenbereiche und unterschiedlicher Farben zu erzeugen.

Nach einer weiteren vorteilhaften Ausgestaltung der Erfindung sind die Lichtquellen Licht emittierende Dioden, sogenannte LEDs. Diese können beispielsweise um die Eingabeöffnung herum angeordnet sein. Darüber hinaus kann das Licht der LEDs in ein das Licht nach verschiedenen Seiten abstrahlendes Bauteil eingekoppelt werden, wobei das Bauteil in seiner Form an die Eingabeöffnung angepasst ist und die Eingabeöffnung umgibt.

Nach einer weiteren vorteilhaften Ausgestaltung der Erfindung ist die Leuchteinrichtung mit mindestens einem das Licht nach verschiedenen Seiten abstrahlenden und das Licht leitenden Bauteil ausgestattet. In bevorzugter Weise umgibt das Bauteil die Eingabeöffnung rahmenartig. Dabei kann es sich beispielsweise um einen durchsichtigen Kunststoffstab handeln, der zu einem kreisförmigen Ring oder einem Rechteck gebogen ist. Der Stab kann auch als Leuchtstab bezeichnet werden. Die Lichtquelle, beispielsweise eine LED, kann in oder hinter der Abdeckung der Leergutrücknahmevorrichtung angeordnet sein und das Licht von hinten in das Bauteil einkoppeln. Das Bauteil leitet das Licht und strahlt es außerdem nach vorne ab, so dass das gesamte Bauteil in der Lichtfarbe der LED strahlt. Es können auch zwei Bauteile vorgesehen sein, die beispielsweise je einen Halbkreis oder zwei Schenkel eines Dreiecks bilden.

Nach einer weiteren vorteilhaften Ausgestaltung der Erfindung besteht das Bauteil aus einem Stab, der eine an die Form der Eingabeöffnung angepasste Krümmung aufweist. Die Krümmung stimmt damit qualitativ mit der Form der Eingabeöffnung überein.

Nach einer weiteren vorteilhaften Ausgestaltung der Erfindung ist die Leuchteinrichtung mit mindestens einer Lichtquelle ausgestattet. Dabei ist die Lichtquelle mit dem Bauteil direkt oder indirekt zur Lichteinkopplung verbunden.

Bei einer direkten Lichteinkopplung treten weniger Verluste auf als bei Zwischenschaltung zusätzlicher Kopplungselemente.

Weitere Vorteile und vorteilhafte Ausgestaltungen der Erfindung sind der nachfolgenden Beschreibung, der Zeichnung und den Ansprüchen zu entnehmen.

In der Zeichnung ist ein Ausführungsbeispiel einer Abdeckung für eine erfindungsgemäße Leergutrücknahmevorrichtung dargestellt. Es zeigen:
- Figur 1: perspektivische Darstellung der nach außen gewandten Seite der Abdeckung einer Leergutrücknahmevorrichtung,
- Figur 2: Ansicht der nach innen gewandten Seite der Abdeckung gemäß Figur 1,
- Figur 3: erstes Ausführungsbeispiel einer Leuchteinrichtung der Abdeckung gemäß Figur 1,
- Figur 4: zweites Ausführungsbeispiel einer Leuchteinrichtung für eine Abdeckung gemäß Figur 1,
- Figur 5: drittes Ausführungsbeispiel einer Leuchteinrichtung für eine Abdeckung gemäß Figur 1.

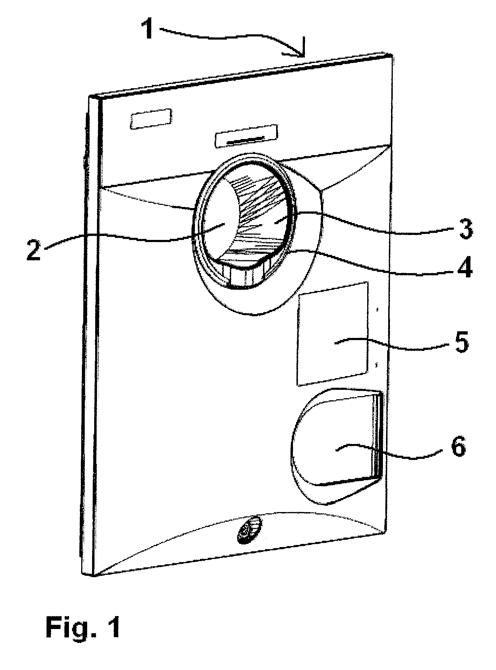

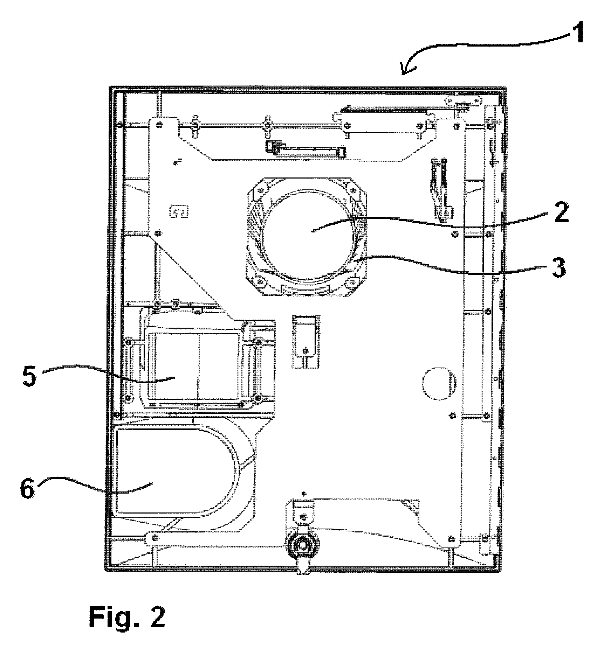

In den Figuren 1 und 2 ist eine Abdeckung 1 für eine Leergutrücknahmevorrichtung von vorne und von hinten dargestellt. Die Leergutrücknahmevorrichtung ist in der Zeichnung nicht erkennbar. Figur 1 zeigt dabei die einem Nutzer zugewandte Seite der Abdeckung 1. Der Nutzer ist in der Zeichnung nicht dargestellt. Diese Seite der Abdeckung ist einer Transporteinrichtung der Leergutrücknahmevorrichtung abgewandt. Die Transporteinrichtung ist in der Zeichnung nicht erkennbar. Figur 2 zeigt die einem Nutzer abgewandte und einer Transporteinrichtung zugewandte Seite der Abdeckung 1. Die Abdeckung 1 weist eine Eingabeöffnung 2 auf, durch die ein Nutzer Leergutbehälter in die Leergutrücknahmevorrichtung eingeben kann. Auf der in Figur 2 erkennbaren Seite der Abdeckung schließt sich an die Eingabeöffnung 2 die Transporteinrichtung an, die einen Leergutbehälter einem in der Zeichnung nicht dargestellten Sensor der Leergutrücknahmevorrichtung zuführt. Die Transporteinrichtung verläuft dabei horizontal oder unter einer Neigung gegen die Horizontale. Die Leergutbehälter, wie beispielsweise Flaschen oder Dosen, werden mit ihrer Längsachse horizontal ausgerichtet, in die Eingabeöffnung 2 eingeführt und auf der Transporteinrichtung abgelegt. Um die Eingabe von Leergutbehältern zu erleichtern und die Leergutbehälter beim Einführen in die Leergutrücknahmevorrichtung zu führen, ist die Eingabeöffnung 2 mit einem konisch geformten Eingabetrichter 3 ausgestattet.

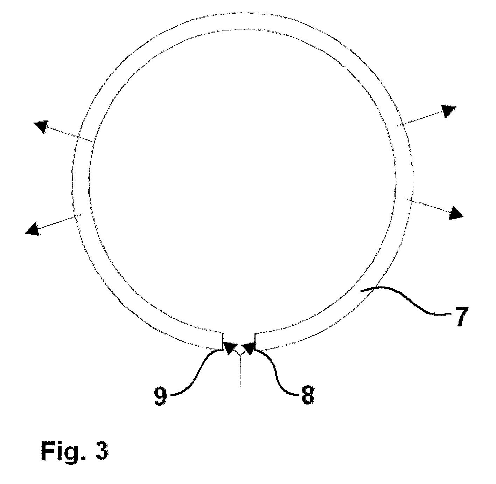

Um die Eingabeöffnung herum ist eine Leuchteinrichtung 4 an der Abdeckung 1 angeordnet. Diese ist ringförmig ausgebildet und besteht aus einem Kunststoffstab, der zu einem Kreis oder einem Teilkreis gebogen ist. Dies ist in Figur 3 dargestellt.

Die Abdeckung 1 weist zusätzlich zu der Eingabeöffnung 2 weitere Öffnungen 5 und 6 auf, in welche beispielsweise ein Drucker oder eine zusätzliche Anzeigeeinrichtung eingesetzt werden können. Der Drucker kann dazu dienen, einen Bon betreffend ein an einen Nutzer auszuzahlendes Pfand zu drucken. Die zusätzliche Anzeigeeinrichtung kann das Pfand eines in die Leergutrücknahmevorrichtung eingegebenen Leergutbehälters und die Summe des Pfandes mehrerer Leergutbehälter anzeigen. Drucker und zusätzliche Anzeigeeinrichtung sind in der Zeichnung nicht dargestellt.

In den Figuren 3, 4 und 5 sind verschiedene Leuchteinrichtungen dargestellt. Diese unterscheiden sich hinsichtlich ihrer Form. Bei der in Figur 3 gezeigten Leuchteinrichtung 4 der Abdeckung 1 gemäß Figuren 1 und 2 weist der das Licht leitende und das Licht abstrahlende Stab 7 eine Kreisform auf. An der nach unten weisenden Seite ist der Stab 7 unterbrochen. An den beiden Enden 8 und 9 wird der Licht einer oder mehrerer Lichtquellen eingekoppelt, die in der Zeichnung nicht dargestellt sind. Die Einkopplung ist durch Pfeile angedeutet. Bei den Lichtquellen handelt es sich bevorzugt um LEDs. Diese können in die Abdeckung 1 integriert sein oder auf der in Figur 2 dargestellten Rückseite der Abdeckung 1 angeordnet sein. Der Stab 7 strahlt das eingekoppelte Licht nach vorne und zur Seite ab. Dies ist durch Pfeile angedeutet.

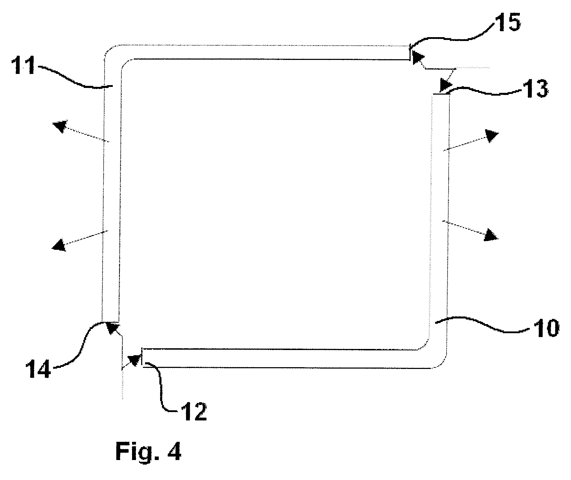

Bei dem in Figur 4 dargestellten zweiten Ausführungsbeispiel sind zwei Stäbe 10 und 11 vorgesehen, die zusammen ein Quadrat bilden. Jeder der beiden Stäbe 10 und 11 weist eine L-Form auf. An den beiden Enden 12 und 13 sowie 14 und 15 der beiden Stäbe 10 und 11 wird das Licht mehrerer Lichtquellen eingekoppelt. Die zu den Stäben 10 und 11 gehörende Leuchteinrichtung kann entweder an einer runden Eingabeöffnung 2 gemäß Figur 1 und 2 oder an einer quadratischen Eingabeöffnung angeordnet sein.

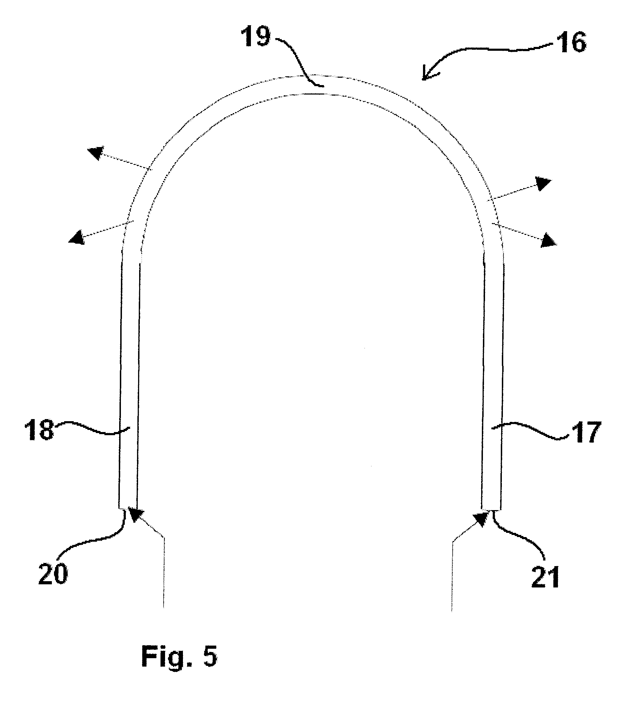

Das in Figur 5 dargestellte dritte Ausführungsbeispiel weist einen Stab 16 auf, der mit zwei parallelen Abschnitten 17 und 18 und einem halbkreisförmigen Abschnitt 19 ausgestattet ist. An den beiden Enden 20 und 21 des Stabs 16 wird das Licht einer oder mehrerer Lichtquellen eingekoppelt. Die zu dem Stab 16 gehörende Leuchteinrichtung kann an einer runden Eingabeöffnung 2 gemäß Figur 1 und 2 oder an einer entsprechend dem Stab geformten Eingabeöffnung angeordnet sein.

Die Leuchteinrichtung 4 ist mit einer in der Zeichnung nicht dargestellten Prozesssteuerungseinrichtung der Leergutrücknahmevorrichtung verbunden. Dabei steuert die Prozesssteuerungseinrichtung die Stromversorgung der Lichtquellen der Leuchteinrichtung. Sie schaltet je nach Status der Leergutrücknahmevorrichtung die einzelnen Lichtquellen ein und aus. Jede der Lichtquellen strahlt dabei Licht eines bestimmten Wellenlängenbereichs ab, so dass das Licht der verschiedenen Lichtquellen unterschiedliche Farben aufweist. Durch Ein- und Ausschalten der Lichtquellen ändert sich die Farbe der in den Figuren 3, 4 und 5 dargestellten Stäbe 7, 10, 11 und 16. Durch die Farbe und die Farbänderung wird der Nutzer über den Status der Leergutrücknahmevorrichtung informiert. Er kann daraus beispielsweise erkennen, ob die Leergutrücknahmevorrichtung betriebsbereit ist, ob ein von ihm eingegebener Leergutbehälter durch einen Sensor erfasst werden kann, ob der Leergutbehälter durch die Leergutrücknahmevorrichtung angenommen wird und ob ein Pfand an ihn ausgegeben wird.

Sämtliche Merkmale der Erfindung können sowohl einzeln als auch in beliebiger Kombination miteinander erfindungswesentlich sein.

### Bezugszeichen

- 1: Abdeckung
- 2: Eingabeöffnung
- 3: Eingabetrichter
- 4: Leuchteinrichtung
- 5: Öffnung
- 6: Öffnung
- 7: Stab
- 8: Ende des Stabs 7
- 9: Ende des Stabs 7
- 10: Stab
- 11: Stab
- 12: Ende des Stabs 10
- 13: Ende des Stabs 10
- 14: Ende des Stabs 11
- 15: Ende des Stabs 11
- 16: Stab
- 17: paralleler Abschnitt des Stabs 16
- 18: paralleler Abschnitt des Stabs 16
- 19: halbkreisförmiger Abschnitt des Stabs 16
- 20: Ende des Stabs 16
- 21: Ende des Stabs 16

## Patentansprüche

1. Leergutrücknahmevorrichtung zur Rücknahme von Leergutbehältern
mit mindestens einem Sensor zur Erfassung mindestens eines charakteristischen Merkmals eines Leergutbehälters,
mit mindestens einer Transporteinrichtung, welche einen Leergutbehälter nach seiner Eingabe in den Leergutrücknahmeautomat dem Sensor zuführt und nach der Erfassung des mindestens einen charakteristischen Merkmals weitertransportiert,
mit einer integrierten oder externen Prozesssteuerungseinrichtung, welche die durch den Sensor ermittelten Daten und/ oder Signale eines Leergutbehälters auswertet, daraus ermittelt, ob der Leergutbehälter durch die Leergutrücknahmevorrichtung angenommen oder an einen Kunden zurückgegeben wird, den Wert eines dem Leergutbehälter zugeordneten Pfandes bestimmt und die Transporteinrichtung steuert,
mit einer Abdeckung (1) der Leergutrücknahmevorrichtung an der Seite, an der die Leergutbehälter in die Leergutrücknahmevorrichtung eingebbar sind,
mit einer Eingabeöffnung (2) für die Leergutbehälter in der Abdeckung (1), mit einer Licht abstrahlenden Leuchteinrichtung (4), welche an der Eingabeöffnung (2) angeordnet ist,
wobei die Leuchteinrichtung (4) die Eingabeöffnung (2) an mehreren Seiten zumindest teilweise umrahmt und durch die Prozesssteuerungseinrichtung gesteuert wird, **dadurch gekennzeichnet, dass**
die Leuchteinrichtung (4) mehrere Lichtquellen mit jeweils einer Abstrahlcharakteristik mit Licht eines bestimmten Wellenlängenbereichs hat, wobei die Längenwellenbereiche der Lichtquellen nicht oder allenfalls teileweise überlappen,
wobei die Leuchteinrichtung (4) mindestens ein das Licht nach verschiedenen Seiten abstrahlendes und das Licht leitendes Bauteil hat, das die Eingabeöffnung rahmenartig umgibt, und
wobei das Licht leitende Bauteil ein durchsichtiger Kunststoffstab ist, der zu einem kreisförmigen Ring oder zu einem Rechteck gebogen ist.

2. Leergutrücknahmevorrichtung nach Anspruch 1, **dadurch gekennzeichnet, dass** die Lichtquellen Licht emittierende Dioden sind.

3. Leergutrücknahmevorrichtung nach Anspruch 1 oder 2, **dadurch gekennzeichnet, dass** der Stab eine der Form der Eingabeöffnung (2) angepasste Krümmung aufweist.

4. Leergutrücknahmevorrichtung nach einem der Ansprüche 1 bis 3, **dadurch gekennzeichnet, dass** die Leuchteinrichtung (4) mit mindestens einer Lichtquelle ausgestattet ist, und dass die Lichtquelle (4) mit dem Bauteil direkt oder indirekt zur Lichteinkopplung verbunden ist.

## Claims

1. A reverse vending machine for taking back empty containers,
with at least one sensor for detecting at least one characteristic feature of an empty container,
with at least one transport device which feeds an empty container after its input into the reverse vending machine to the sensor and, after the detection of the at least one characteristic feature, transports it further,
with an integrated or external process control device which evaluates the data and/or signals of an empty container determined by the sensor, determines therefrom whether the empty container is accepted by the reverse vending machine or is returned to a customer, determines the value of a deposit assigned to the empty container and controls the transport device,
with a cover (1) of the reverse vending machine on the side on which the empty containers can be input into the reverse vending machine,
with an input opening (2) for the empty containers in the cover (1),
with a lighting device (4) which emits light and is arranged at the input opening (2),
wherein the lighting device (4) frames the input opening (2) on several sides at least in part and is controlled by the process control device, **characterized in that**
the lighting device (4) has several light sources, each of which having one emission characteristic with light of a certain wavelength range, wherein the wavelength ranges of the light sources do not or at most partially overlap,
wherein the lighting device (4) has at least one component part emitting the light in various directions and conducting the light, which component part surrounds the input opening like a frame, and
wherein the component part conducting the light is a transparent plastic rod which is bent to form a circular ring or a rectangle.

2. The reverse vending machine according to claim 1, **characterized in that** the light sources are light emitting diodes.

3. The reverse vending machine according to claim 1 or 2, **characterized in that** the rod has a curvature adapted to the shape of the input opening (2).

4. The reverse vending machine according to one of the claims 1 to 3, **characterized in that** the lighting device (4) is equipped with at least one light source and that the light source (4) is directly or indirectly connected to the component part for the coupling-in of light.

## Revendications

1. Dispositif de récupération d'emballages vides permettant la récupération de contenants d'emballages vides au moyen d'au moins un capteur destiné à détecter au moins une caractéristique d'un contenant d'emballages vides,
comprenant au moins un dispositif de transport, lequel amène un contenant d'emballage vide au capteur une fois ledit contenant introduit dans la machine automatique de récupération d'emballages vides et lequel continue de le transporter après la détection de ladite au moins caractéristique,
un dispositif de commande de processus intégré ou externe, lequel évalue les données et/ou les signaux d'un contenant d'emballage vide déterminés par le capteur, en déduit si le contenant d'emballage vide est accepté par le dispositif de récupération d'emballages vides ou rendu à un client, détermine la valeur d'une consigne associée au contenant d'emballage vide et commande le dispositif de transport,
un couvercle (1) du dispositif de récupération d'emballages vides sur le côté sur lequel les contenants d'emballage vide peuvent être introduits dans le dispositif de récupération d'emballages vides,
une ouverture d'introduction (2) des contenants d'emballages vides dans le couvercle (1),
un dispositif d'éclairage (4) qui émet une lumière et est disposé sur l'ouverture d'introduction (2),
le dispositif d'éclairage (4) encadrant au moins en partie l'ouverture d'introduction (2) sur plusieurs côtés et étant commandé par le dispositif de commande de processus, **caractérisé en ce que**
le dispositif d'éclairage (4) comprend plusieurs sources de lumière présentant chacune une caractéristique d'émission de lumière d'une plage de longueurs d'onde définie, les plages de longueur d'onde des sources de lumière ne se chevauchant pas ou se chevauchant tout au plus en partie,
le dispositif d'éclairage (4) présentant au moins un élément qui émet la lumière vers différents côtés, qui conduit la lumière et qui entoure l'ouverture d'introduction à la façon d'un cadre, et
l'élément conduisant la lumière étant une barre transparente en matière plastique, qui est courbée pour obtenir une bague circulaire ou un rectangle.

2. Dispositif de récupération d'emballages vides selon la revendication 1, **caractérisé en ce que** les sources de lumière sont des diodes électroluminescentes.

3. Dispositif de récupération d'emballages vides selon la revendication 1 ou 2, **caractérisé en ce que** la barre présente une courbure adaptée à la forme de l'ouverture d'introduction (2).

4. Dispositif de récupération d'emballages vides selon l'une quelconque des revendications 1 à 3, **caractérisé en ce que** le dispositif d'éclairage (4) est équipé d'au moins une source de lumière, et **en ce que** la source de lumière (4) est reliée directement ou indirectement à l'élément pour l'injection de lumière.
